(19) **Europäisches Patentamt / European Patent Office / Office européen des brevets**

(11) **EP 1 809 041 A1**

(12) **EUROPEAN PATENT APPLICATION**

(43) Date of publication:
**18.07.2007 Bulletin 2007/29**

(51) Int Cl.:
***H04N 7/26*** (2006.01)       ***H04N 7/68*** (2006.01)

(21) Application number: **06250122.6**

(22) Date of filing: **11.01.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventors:<br>• **Cieplinski, Leszek**<br>  **Guildford**<br>  **Surrey GU1 2UF (GB)**<br>• **Ghanbari, Souroush**<br>  **Guildford**<br>  **Surrey GU1 1HS (GB)** |
| (71) Applicants:<br>• **Mitsubishi Electric Information Technology Centre**<br>  **Europe B.V.**<br>  **Guildford,**<br>  **Surrey GU2 7YD (GB)**<br>  Designated Contracting States:<br>  **GB**<br>• **MITSUBISHI DENKI KABUSHIKI KAISHA**<br>  **Chiyoda-ku**<br>  **Tokyo 100-8310 (JP)**<br>  Designated Contracting States:<br>  **AT BE BG CH CY CZ DE DK EE ES FI FR GR HU IE IS IT LI LT LU LV MC NL PL PT RO SE SI SK TR** | (74) Representative: **Whitlock, Holly Elizabeth Ann et al**<br>**R G C Jenkins & Co,**<br>**26 Caxton Street**<br>**London SW1H 0RJ (GB)** |

(54) **Error concealement for scalable video coding**

(57)   A method of deriving replacement block information, such as a replacement motion vector, for a lost or damaged image block in scalable video coding comprises combining information about neighbouring block information in at least the current layer and the corresponding and/or neighbouring blocks in at least one other layer, to derive said replacement block information.

Figure 5

**Description**

Transmission of compressed video bitstreams is, in general, very sensitive to channel errors. For instance, a single bit error in a coded video bitstream may cause severe degradation of picture quality. When bit errors occur during transmission, which cannot be fully corrected by an error correction scheme, error detection and concealment is needed to conceal the corrupted image at the receiver.

Error concealment algorithms attempt to repair the damaged part of the received picture. An overview of the state of the art in this area can be found in "Error Resilient Video Coding Techniques" in IEEE Signal Processing Magazine, Vol. 17, Issue 4, pages 61-82, July 2001, by Yao Wang, Stephan Wenger, Jaingtao Wen, and Aggelos K. Kassaggelos. The techniques can be classified into two broad classes: Spatial & Temporal Concealment. In Spatial Concealment, missing data are reconstructed using neighbouring spatial information, whilst in Temporal Concealment the lost data are reconstructed from the data in the temporally adjacent frames.

One simple temporal concealment technique simply replaces the damaged block with the spatially corresponding block in the previous frame. This method is referred to as the copying algorithm. It can produce bad concealment in the areas where motion is present. Significant improvements can be obtained by replacing the damaged block with the motion-compensated block, but to do this a true motion vector needs to be recovered.

Several motion vector recovery techniques are widely used to conceal the damaged block as follows:

- The motion-compensated block obtained with the "Average" of the motion vectors of its neighbouring blocks.
- The motion-compensated block obtained with the "Median" of the motion vectors of its neighbouring blocks.
- Boundary matching algorithm described in "Recovery of lost or erroneously received motion vectors" by W. Lam, A. R. Reibman, and B. Liu (IEEE Proc. of Int. Conf. Acoustics, Speech, Signal Processing, pages 545-548, March 1992). From a set of candidate motion vectors (MVs), each MV is tested for concealment and the selected MV is the one that minimizes the mean square error between its boundaries and the boundaries adjacent to them from the top, bottom and left macroblocks around the area to be concealed. The boundary used for this calculation can be easily adjusted depending on the availability of neighbouring reconstructed macroblocks.

Generally the Median method, also known as the Vector Median, is used to estimate the lost MV from a set of candidate MVs. The Vector Median gives the least distance from all the neighbouring candidate vectors. As a result, it is a good method for choosing one of the neighbouring MVs for the reconstruction of the missing block MV. The drawback of this method is the high computational cost, which makes it not viable for use in applications with limited processing power, for example in a video mobile environment.

The technique proposed in European Patent Application EP1395061, incorporated herein by reference, uses an algorithm simpler than the Vector Median for selecting one of the neighbouring block MVs. The average of the surrounding blocks motion vectors gives the minimum distortion from all the surrounding motion vectors. However, in a situation where the surrounding motion vectors have significantly different directions, cancellation between vectors of opposite direction can result in the average vector having a magnitude small by comparison with the neighbouring candidate vectors. It is more probable that the missing vector will be closer to the average vector than to vectors that are most dissimilar to the average. Following this argument, the vector closest to this average is chosen. This method will be referred to as Nearest-to-Average (N-t-A method).

In scalable video coding, in particular in the approach taken in the MPEG/ITU-T JVT SVC codec and in some wavelet-based video codecs, the motion vectors can be transmitted in a scalable fashion. The base layer of the bitstream has a coarse representation of the motion vectors, which may be refined in the enhancement layers. In particular, in the current draft of the MPEG-4 AVC Scalable Video Coding amendment (Joint Draft 4, JVT document number JVT-Q201), depending on the macroblock coding mode, three options are available:

> 1. the MV components are left the same as in base layer
> 2. the MV components are refined by -1, 0, or 1 (in quarter pel units)
> 3. a new MV is transmitted without reference to the base layer MV.

In many application scenarios for scalable video coding, the base layer is expected to have stronger error protection than the enhancement layer and thus it is quite likely that the motion vector refinement for a particular block will be lost while its coarse representation will be available.

In "Error concealment for SNR scalable video coding" by Ghandi & Ghanbari (Signal Processing: Image Communication, 2005, in press), error concealment in the enhancement layer is carried out by selecting one of the following choices:

> 1. a motion compensated block of the previous enhancement picture using an estimate of the current MV based on neighbouring MVs (forward)
> 2. the corresponding base layer block (upward)
> 3. the motion compensated block using the corresponding base MV (direct)

The three options are then examined and the one with the lowest boundary distortion (D) is selected to replace the missing block. The block boundary distortion is defined as:

$$D_e = \frac{1}{N} \sum_{i=0}^{N-1} |c_i - n_i|$$

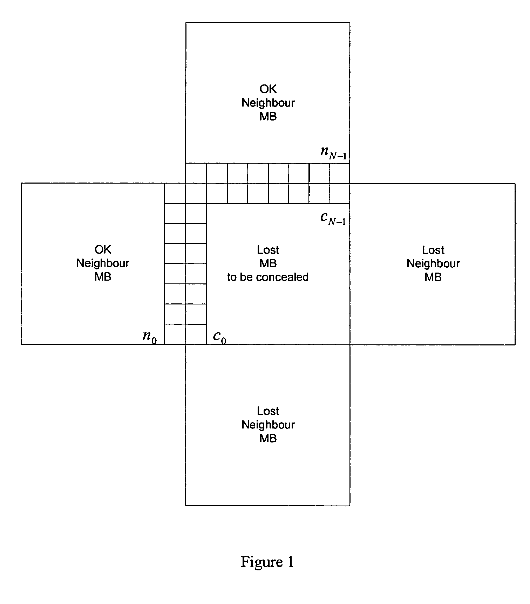

where $c_i$ and $n_i$ are boundary pixels of the correctly received neighbouring blocks and the substituted pixels, respectively (see Figure 1).

Relatively few error concealment algorithms address motion recovery in scalable video coding scenario. The existing error concealment techniques are either straightforward extensions of non-scalable concepts or use simple copying and scaling of base layer MVs and/or texture and are therefore not optimally adapted to deal with the error patterns that may occur in the case of scalably encoded motion vectors. In particular, they do not take advantage of all the information available in all the temporal, spatial and quality layers to efficiently estimate the lost motion vectors and block coding/partitioning modes.

Aspects of the invention are set out in the accompanying claims.

In a first aspect, the invention relates to a method of deriving block information for an image block in scalable video coding, where encoded block data are provided in a plurality of layers at different levels of refinement, the method comprising combining information about neighbouring block information in at least the current layer and/or image and the corresponding and/or neighbouring blocks in at least one other layer and/or image to derive said replacement block information.

Neighbouring here means spatially or temporally neighbouring. Current image can mean the current image in any layer, and another image means a temporally different image, such as a previous or subsequent image, and can also mean the temporally different image in any layer.

In a second aspect, the invention relates to a method of deriving block information for an image block in scalable video coding, where encoded block data are provided in a plurality of layers at different levels of refinement, the method comprising combining available block information from at least two of: spatially neighbouring blocks in the current layer, temporally neighbouring blocks in the current layer, a corresponding block in a first other layer for the current frame, a corresponding block in a second other layer for the current frame, blocks spatially neighbouring a corresponding block for the current frame in a first other layer, blocks temporally neighbouring a corresponding block for the current frame in a first other layer, blocks spatially neighbouring a corresponding block for the current frame in a second other layer, and blocks temporally neighbouring a corresponding block for the current frame in a second other layer, to derive said replacement block information.

Some aspects of the invention relate to deriving block information for an image block. Usually, but not essentially, this will be replacement block information for lost or damaged block information. The block information is, for example, motion vector information, or prediction mode or block partition information. The block information for a given image block is derived using information from blocks neighbouring said image block, either temporally, spatially or in another layer (that is, using the block information for the corresponding block in another layer, or for blocks neighbouring the corresponding block in another layer). In the specification, unless otherwise apparent from the context, the term motion vector includes motion vector refinements, such as in layers above the base layer in scalable coding.

An underlying feature of embodiments of the invention is to combine all the available information from all the layers in the formation of the estimate of the current layer motion vector. It can be expected that at least some of the following candidates will be available:

- MVs from spatially adjacent blocks in the current layer
- MVs from temporally adjacent blocks in the current layer
- Coarse (base/lower layer) MVs in the current frame (for current block and neighbouring blocks for which the current layer MV is not available)
- Coarse (base/lower layer) MVs from previous and future frames
- MV refinements from higher layers in the current frame
- MV refinements from higher layers from previous and future frames.

The estimate of the current MV is formed using some or all of the available candidate MVs using a criterion aiming at minimisation of the concealment error.

Embodiments of the invention will be described with reference to the accompanying drawings, of which:

Fig. 1 illustrates boundary pixels of a lost block (MB);
Fig. 2 illustrates motion vector candidates from base & enhancement layer frames;
Fig. 3 illustrates selecting a candidate MV that is closest to the average MV $V_0$;
Fig. 4 illustrates interpolation of top & bottom blocks (MB) for spatial concealment; and
Fig. 5 is a schematic block diagram of a mobile videophone.

Embodiments of the invention will be described in the context of a mobile videophone in which image data captured by a video camera in a first mobile phone is transmitted to a second mobile phone and displayed.

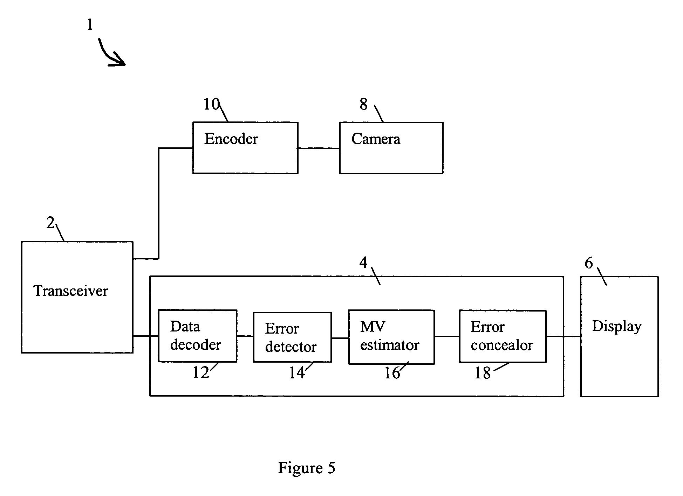

Fig. 5 schematically illustrates the pertinent parts of a mobile videophone 1. The phone 1 includes a transceiver 2 for transmitting and receiving data, a decoder 4 for decoding received data and a display 6 for displaying received images. The phone also includes a camera 8 for capturing images of the user and a coder 10 for encoding the captured images.

The decoder 4 includes a data decoder 12 for decoding received data according to the appropriate coding technique, an error detector 14 for detector errors in the decoded data, a motion vector estimator, 16 for estimating damaged motion vectors, and an error concealer 18 for concealing errors according to the output of the motion vector estimator.

A method of decoding received image data for display on the display 6 according to embodiments of the invention will be described below.

Image data captured by the camera 8 of the first mobile phone is coded for transmission using a suitable known technique using frames, macroblocks and motion compensation, such as an MPEG-4 technique, for example. The data is scalably encoded in the form of base and enhancement layers, as known in the prior art. The coded data is then transmitted.

The image data is received by the second mobile phone and decoded by the data decoder 12. As in the prior art, errors occurring in the transmitted data are detected by the error detector 14 and corrected using an error correction scheme where possible. Where it is not possible to correct errors in motion vectors, an estimation method for deriving a replacement motion vector is applied, as described below, in the motion vector estimator 16.

The first implementation is based on adding the coarse MV as an additional candidate in the Nearest-to-Average method (N-t-A) known from prior art.

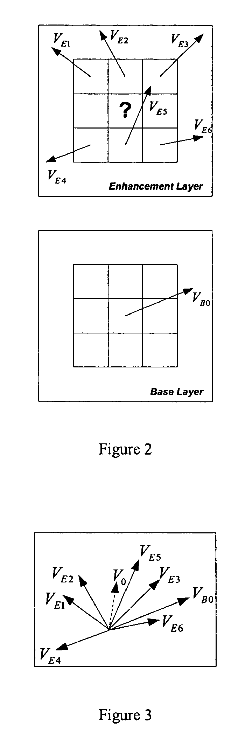

The top part of Figure 2 shows an example of MVs in the current layer, denoted $V_{E1}$ to $V_{E6}$, which would be used for MV recovery in the N-t-A method described above. In the current implementation of the inventive idea we add the base layer MV denoted $V_{B0}$ in the bottom part of Figure 2 to the set of candidate MVs.

In Figure 3, $V_0$ is the average of the candidate MVs: $V_{E1}$-$V_{E6}$ & $V_{B0}$. In this example, the closest MV to $V_0$ is $V_{E5}$. Hence $V_{E5}$ is selected to replace the missing MV in the current layer.

In the example above, it is assumed that the MVs in the current layer from blocks above and below the current block have been correctly decoded. If more MVs in the current layer (e.g. the left and right neighbours) are available they can also be used for prediction. More MVs from the base layer, other pictures in the current layer, as well as the MVs incorporating refinements from the higher enhancement layers can be added to the candidate set. This is particularly useful if fewer or especially no MVs in the current layer are available.

The following describes the possible alternatives and enhancements to the basic scheme described above. The alternative candidate selection methods can be used to replace the N-t-A method outlined above. The spatial concealment algorithm can be used in combination with the basic scheme. The use of higher-level motion enhancements can be used either as an alternative candidate selection method or as a refinement of the N-t-A or the alternative algorithms.

In a second implementation, the candidate selection is based on the direction/magnitude of the MV for the current block in the base layer. The MV candidates of spatially/temporally adjacent blocks are selected that have similar direction/magnitude as the MV of the current block in the base layer. The candidate MV can also be further modified by combining this selected MV in the current layer with the MV in the base layer (e.g. taking the average of the two MVs).

In a third implementation, information about the MV refinements in the current layer is used to guide the candidate selection process. For example, if all the MV refinements in the current layer are small (e.g. 0), the decision is taken to use the base layer motion vector as it is very likely that the refinement for the current block is also very small.

A fourth selection method is to look at surrounding blocks. If the majority of these neighbouring blocks take their prediction from the base layer, then the MV for the current block is copied from the base layer. If the majority of neighbouring blocks take their prediction from previous frame, then the lost MV is estimated with reference to the previous frame. Also if the majority of blocks take their prediction from the next frame, then the lost MV is estimated with reference to the next frame. With this selection method, once the reference picture is selected, then the lost MV is estimated as before. Using this estimated MV, the lost block is concealed using one of the selected reference pictures (base, previous current, future current, etc...)

In a fifth implementation, the information from different layers (particularly base/coarser layers) is used as an additional error criterion. An example of this is a two-step selection algorithm consisting of using the block boundary matching in the first step and comparison of motion compensation to upsampled base layer block in the second step. In a variation of this scheme, a combined error measure is introduced based on the weighted average of the error boundary measure and difference between upsampled base layer block and motion compensated block.

It is also possible to use the refinements of motion vectors that come from higher quality levels (higher layer motion vector refinements) as in a sixth implementation.

The simplest use of the refinement information is to restrict the possible range of the motion vector based on the enhancement motion vector not being allowed to point outside the range specified by the syntax or the known encoder configuration. This means that the candidate MVs that would result in invalid MVs in the next enhancement layer can be removed from consideration.

A more sophisticated approach, which can be used in combination with the simple restriction, analyses the characteristics of the available MV refinements. This analysis may either be based on simple determination of the dominant direction of the MV enhancements or more sophisticated statistical analysis. The information obtained is then used either solely or in combination with other criteria to guide the selection process among the candidate MVs. For example, if the MV refinement is available for the current block location, the candidate motion vector that has the closest corresponding refinement is selected as the estimate for the current block MV. In a more sophisticated implementation, the closeness of the refinement is combined with other information (e.g. the pre-selection of candidate MVs belonging to dominant cluster, the block edge difference, etc.).

As a special case, it is also possible to use the analysis of the refinement motion vector field to recover lost motion vectors in the base layer. In one implementation, the correlation between the MV refinements in the enhancement layer corresponding to the received MVs in the base layer and those corresponding to the lost MVs is used to guide the selection of the base layer MVs to be used for concealment.

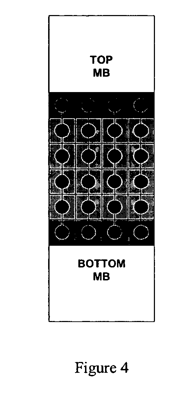

A seventh implementation relates to spatial concealment. If neighbouring blocks in the current layer are intra coded then the lost block can use intra prediction/interpolation from neighbouring reconstructed blocks for concealment, subject to an error criterion. Often, when errors occur, multiple blocks in the same horizontal line are corrupted. Because of this it is advantageous to estimate a damaged block from information contained in the blocks from the rows above and below the block in which the error occurs. An example of such interpolation is shown in Figure 4, where interpolation between the block on the top and the block on the bottom of the current block is employed.

The decision on the use of spatial prediction/ interpolation is then based on a suitable error measure. An example of this is the mean square error between the estimated current block and its upsampled base layer version.

Similar ideas to those above can be applied to the recovery of the macroblock mode, macroblock and sub-macroblock partition information.

When a block is lost its information such as block mode will be lost too. If the surrounding block modes use bi-directional prediction then the lost block will be treated as bidirectional mode and its lost MV will be concealed using bidirectional motion compensation from previous and future enhancement pictures.

In the case where on one side (e.g. right hand side) of the macroblock the majority of macroblocks are INTRA coded, then the lost macroblock will be partitioned into two sections. In one section concealment is carried out using spatial concealment from the neighbouring intra macroblocks and the other partition of the lost macroblock will be concealed by estimating a lost MV from surrounding neighbouring INTER macroblocks.

In MPEG-4 AVC/H.264 a macroblock can be partitioned in a number of ways for the purpose of motion estimation and compensation. The partitioning modes are 16x16, 16x8, 8x16 and 8x8. Each macroblock can have more than one MV assigned to it depending on its partitioning mode. For the 16x16 block size one MV is needed, for the 16x8 and 8x16 two MVs are required and for the 8x8 mode 4 MVs are required. To estimate the lost MB mode the surrounding macroblocks' modes are examined. For example if the majority of MVs have 16x8 mode then the lost macroblock mode is assigned 16x8 mode. Hence two MVs will need to be estimated from surrounding neighbours to conceal the lost MV. Similarly, when the 8x8 partitioning is used, the 8x8 blocks may be further subdivided into 8x4, 4x8 and 4x4 sub-blocks. These sub-macroblock partitioning modes can be recovered in similar fashion to the macroblock partitioning modes described above.

Examples of applications of the invention include videophones, videoconferencing, digital television, digital high-definition television, mobile multimedia, broadcasting, visual databases, interactive games. Other applications involving image motion where the invention could be used include mobile robotics, satellite imagery, biomedical techniques such as radiography, and surveillance.

In this specification, the term "frame" is used to describe an image unit, including after processing, such as filtering, changing resolution, upsampling, downsampling, but the term also applies to other similar terminology such as image, field, picture, or sub-units or regions of an image, frame etc. The terms pixels and blocks or groups of pixels may be used interchangeably where appropriate. In the specification, the term image means a whole image or a region of an image, except where apparent from the context. Similarly, a region of an image can mean the whole image. An image includes a frame or a field, and relates to a still image or an image in a sequence of images such as a film or video, or in a related group of images.

The image may be a grayscale or colour image, or another type of multispectral image, for example, IR, UV or other electromagnetic image, or an acoustic image etc.

The invention is preferably implemented by processing electrical signals using a suitable apparatus.

The invention can be implemented for example in a computer-based system, with suitable software and/or hardware modifications. For example, the invention can be implemented using a computer or similar having control or processing means such as a processor or control device, data storage means, including image storage means, such as memory, magnetic storage, CD, DVD etc, data output means such as a display or monitor or printer, and data input means such as a receiver, or any combination of such components together with additional components. Aspects of the invention can be provided in software and/or hardware form, or in an application-specific apparatus or application-specific modules can be provided, such as chips. Components of a system in an apparatus according to an embodiment of the invention may be provided remotely from other components.

**Claims**

1. A method of deriving block information for an image block in scalable video coding, where encoded block data are provided in a plurality of layers at different levels of refinement, the method comprising combining information about neighbouring block information in at least the current layer and/or image and the corresponding and/or neighbouring blocks in at least one other layer and/or image, to derive said replacement block information.

2. A method of deriving block information for an image block in scalable video coding, where encoded block data are provided in a plurality of layers at different levels of refinement, the method comprising combining available block information from at least two of: spatially neighbouring blocks in the current layer, temporally neighbouring blocks in the current layer, a corresponding block in a first other layer for the current frame, a corresponding block in a second other layer for the current frame, blocks spatially neighbouring a corresponding block for the current frame in a first other layer, blocks temporally neighbouring a corresponding block for the current frame in a first other layer, blocks spatially neighbouring a corresponding block for the current frame in a second other layer, and blocks temporally neighbouring a corresponding block for the current frame in a second other layer, to derive said replacement block information.

3. The method of claim 1 or claim 2 for deriving a motion vector for a block.

4. The method of claim 3 comprising analysing characteristics of motion vectors of blocks neighbouring said image block in the current layer and/or at least one other layer.

5. The method of claim 4 comprising selecting motion vectors of neighbouring blocks based on similarity to the motion vector of said image block in at least one other layer.

6. The method of claim 4 or claim 5 comprising selecting motion vector characteristics on the basis of a majority.

7. The method of claim 6. comprising selecting the majority value motion vector characteristic.

8. The method of any of claims 3 to 7 wherein said characteristics comprise direction and/or magnitude.

9. The method of any of claims 3 to 8 comprising combining one or more selected motion vectors from different layers.

10. The method of claim 9 comprising combining motion vectors from neighbouring blocks in the current layer and the corresponding and/or neighbouring blocks in at least one other layer.

11. The method of claim 9 or claim 10 comprising calculating an average of motion vectors from neighbouring blocks in the current layer and the corresponding and/or neighbouring blocks in at least one other layer.

12. The method of claim 11 comprising selecting the motion vector used in the averaging that is closest to the average value as the replacement motion vector.

13. The method of claim 12 wherein the average is the mean.

14. The method of any of claims 4 to 7 wherein said characteristics comprise type of prediction, such as prediction with respect to another layer, the previous frame or the next frame.

15. The method of any of claims 3 to 14 applied to other block information such as prediction mode or block partition, instead of motion vector information.

16. A method of deriving a replacement motion vector for a lost or damaged motion vector for an image block in scalable video coding, where encoded block data are provided in a plurality of layers at different levels of refinement, the method comprising selecting motion vectors of neighbouring blocks in the layer of said image block having similar direction and/or magnitude of the motion vector of the corresponding block in a lower layer.

17. A method of deriving a replacement motion vector for a lost or damaged motion vector for an image block in scalable video coding, where encoded block data are provided in a plurality of layers at different levels of refinement, the method comprising deciding whether or not to use the motion vector of the corresponding block in a lower layer based on an evaluation of neighbouring motion vectors in the layer of said image block, such as whether or not they are close to zero.

18. A method of deriving a replacement motion vector for a lost or damaged motion vector for an image block in scalable video coding, where encoded block data are provided in a plurality of layers at different levels of refinement, the method comprising referring to motion vectors of a higher layer.

19. A method of deriving a replacement block information, such as mode or partition information, for lost or damaged block information for an image block in scalable video coding, where encoded block data are provided in a plurality of layers at different levels of refinement, based on said block information for neighbouring blocks in the layer of said image and for neighbouring blocks and/or the corresponding block in at least one other layer.

20. The method of any preceding claim using a higher layer to the current layer.

21. The method of any preceding claim using the base layer.

22. The method of any preceding claim further comprising evaluating the block information, such as motion vector information, using information from at least two layers.

23. A method of concealing an error in an image block comprising using block information derived using the method of any preceding claim.

24. A method of concealing an error in an image block comprising determining whether or not neighbouring blocks are intra coded, and using this information to guide the use of spatial prediction/interpolation from one or more neighbouring blocks.

25. The method of claim 24, where for the neighbouring intra coded blocks used for spatial prediction/interpolation of the current block, for which the current layer enhancements are not available, the upsampling of their base layer representation is used.

26. The method of claim 24 further comprising evaluating based on a comparison of the interpolated block and an upsampled version of the corresponding block.

27. A method of evaluating replacement block information for lost or damaged block information for an image block in scalable video coding, where encoded block data are provided in a plurality of layers at different levels of refinement, the method comprising using information from at least two layers.

28. The method of claim 27 comprising combining information from at least two layers.

29. The method of claim 28 comprising a combination of an error measure based on block boundary distortion and an error measure based on comparison of the block with replaced block information with an upsampled version of the corresponding block of a lower layer.

30. A computer program for executing a method as claimed in any preceding claim.

31. A data storage medium storing a computer program as claimed in claim 30.

32. A control device or apparatus adapted to execute a method as claimed in any one of claims 1 to 29.

33. Apparatus as claimed in claim 32 comprising a data decoding means, error detecting means, a motion vector estimator and error concealing means.

34. A receiver for a communication system or a system for retrieving stored data comprising an apparatus as claimed in claim 32 or claim 33.

35. A receiver as claimed in claim 34 which is a mobile videophone.

OK
Neighbour
MB

$n_{N-1}$

$c_{N-1}$

OK
Neighbour
MB

Lost
MB
to be concealed

Lost
Neighbour
MB

$n_0$

$c_0$

Lost
Neighbour
MB

Figure 1

Figure 2

Figure 3

Figure 4

Figure 5

**European Patent Office**

**EUROPEAN SEARCH REPORT**

Application Number

EP 06 25 0122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GHANDI ET AL: "Error concealment for SNR scalable video coding" SIGNAL PROCESSING. IMAGE COMMUNICATION, ELSEVIER SCIENCE PUBLISHERS, AMSTERDAM, NL, [Online] 21 July 2005 (2005-07-21), XP002374526 ISSN: 0923-5965 Retrieved from the Internet: URL:www.sciencedirect.com> [retrieved on 2006-03-28] * abstract * * pages 91-99 * | 1,2, 16-19,23 | INV. H04N7/26 H04N7/68 |
| A | KAUP A.: "Error concealment for SNR scalable video coding in wireless comunnicaiton" VISUAL COMMUNICATIONS AND IMAGE PROCESSING 2000, vol. 4067, May 2000 (2000-05), XP002374527 * pages 175-177 * * pages 180-182 * | 1-23, 30-35 | |
| A | WANG Y., ET AL: "Error resilient video coding techniques" IEEE SIGNAL PROCESSING MAGAZINE, vol. 17, no. 4, July 2000 (2000-07), XP002374528 * pages 68-70 * | 1-23, 30-35 | TECHNICAL FIELDS SEARCHED (IPC) H04N |

~~The present search report has been drawn up for all claims~~

| Place of search | Date of completion of the search | Examiner |
|---|---|---|
| Munich | 21 August 2006 | Lindgren, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................
& : member of the same patent family, corresponding
   document

EPO FORM 1503 03.82 (P04C01)

European Patent
Office

Application Number

EP 06 25 0122

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-23,30-35

The Search Division considers that the present European patent application does not comply with the requirements of unity of invention and relates to several inventions or groups of inventions, namely:

1. claims: 1-23,30-35

    In scalable video coding, deriving replacement block information from temporally and spatially neighbouring blocks as well as from blocks from different layers.
    ---

2. claims: 24-26

    In an image block concealing an error by spatial prediction/interpolation from neighbouring blocks based on whether said blocks are intra coded or not.
    ---

3. claims: 27-29

    In scalable video coding, evaluating replacement block information by a combined error measure based on block boundary distortion and a comparison between a block and an upsampled version of the corresponding block of a lower layer.
    ---

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1395061 A

### Non-patent literature cited in the description

- **YAO WANG ; STEPHAN WENGER ; JAINGTAO WEN ; AGGELOS K. KASSAGGELOS.** Error Resilient Video Coding Techniques. *IEEE Signal Processing Magazine,* July 2001, vol. 17 (4), 61-82

- **W. LAM ; A. R. REIBMAN ; B. LIU.** Recovery of lost or erroneously received motion vectors. *IEEE Proc. of Int. Conf. Acoustics, Speech, Signal Processing,* March 1992, 545-548
- **GHANDI ; GHANBARI.** Error concealment for SNR scalable video coding. *Signal Processing: Image Communication,* 2005